# NEUE EUROPÄISCHE PATENTSCHRIFT

(11) **EP 0 595 186 B2**
(45) Veröffentlichungstag und Bekanntmachung des Hinweises auf die Entscheidung über den Einspruch: **09.04.2003**
(45) Hinweis auf die Patenterteilung: 17.06.1998
(21) Anmeldenummer: 93117009.6
(22) Anmeldetag: 21.10.1993
(51) Int. Cl.: B05D 7/00, B05D 1/36, C09D 175/04

(54) **Verfahren zur Herstellung von Mehrschichtlackierungen**
Process for making multilayer paint
Procédé pour l'élaboration de peintures multicouches

(30) Priorität: 23.10.1992 DE 4235778
(43) Veröffentlichungstag der Anmeldung: 04.05.1994
(73) Patentinhaber: E.I. DU PONT DE NEMOURS AND COMPANY, Wilmington Delaware 19898 (US)
(72) Erfinder: Doebler, Klaus-Peter, D-42447 Radevormwald (DE); Göldner, Wolfgang, Dr., D-51491 Heiligenhaus (DE); Kimpel, Matthias, Dr., D-58332 Schwelm (DE); Klein, Klausjörg, D-42289 Wuppertal (DE)
(74) Vertreter: Hrabal, Ulrich, Dr.

(56) Entgegenhaltungen:
- EP-A- 0 595 356
- DE-A- 3 432 233
- DE-A- 3 447 257
- DE-A- 4 125 459
- DE-A- 4 126 476

## Beschreibung

Die Erfindung betrifft ein Verfahren zur. Herstellung einer Mehrschichtlackierung durch Naß-in-Naß-Applikation eines wasserverdünnbaren, ionisch stabilisierten Überzugsmittels auf eine unvernetzte, zuvor elektrophoretisch abgeschiedene Lackschicht, gefolgt von gemeinsamem Einbrennen dieser Lackschichten.

Die industrielle Lackierung ist gekennzeichnet durch Bestrebungen, die Lackierprozesse hinsichtlich Umweltfreundlichkeit und Energieverbrauch zu optimieren. Wege zu diesem Ziel sind z.B. der Einsatz wäßriger Lacksysteme und die Einsparung energieaufwendiger Verfahrensschritte, wie z.B. Verminderung der Anzahl von Einbrennschritten. Dabei ist es üblich, um die unteren Lackschichten nicht zu stark thermisch zu belasten, daß bei den Einbrennschritten der einzelnen Schichten die Einbrenntemperaturen von folgenden Schichten unter denen der vorherigen Schichten liegen.

In der DE-A-3447257 wird ein Verfahren zur mehrschichtigen Lackierung eines metallischen leitfähigen Substrats beschrieben, bei dem eine erste und mindestens eine weitere zweite Beschichtung jeweils naß-in-naß kathodisch, also elektrophoretisch abgeschieden und anschließend gemeinsam eingebrannt werden.

Die DE-A-36 06 028 beschreibt ein Lackierverfahren zur Erzeugung einer Zweischichtlackierung, bei dem nach Aufbringen einer kataphoretisch abgeschiedenen Gruridierung naß-in-naß eine zweite Schicht aufgebracht wird und beide Schichten danach gemeinsam eingebrannt werden. Das Material für die Deckschicht ist nicht wasserverdünnbar, es enthalt organische Lösungsmittel und besteht aus einem hydroxylgruppenhaltigen Harz, einer Polyisocyanatverbindung sowie Additiven.

Die JP-B-91 021 227 beschreibt eine Dreischichtlackierung mit der Naß-in-Naß-Applikation einer wasserverdünnbaren, melaminharzvernetzenden Steinschlagschutzschicht auf Polyesterbasis auf eine unausgehärtete, einen Wassergehalt von unter 40 % aufweisende Elektrotauchlackschicht. Dabei muß eine Überzugsschicht ein in einem wäßrigen Bindemittel dispergiertes organisches pulverförmiges Harz aufweisen.

In der US-A-4 537 926 werden wasserverdünnbare Steinschlagschutzmaterialien beschrieben, die gegebenenfalls auf unvernetzte Elektrotauchlackfilme appliziert und gemeinsam mit diesen eingebrannt werden können. Als Bindemittelbasis der Steinschlagschutzschicht dienen Copolymerisate auf Basis von ungesättigten Monomeren. Es werden thermoplastische Polymerisate beschrieben, das heißt diese Steinschlagschutzmaterialien bleiben nach dem gemeinsamen Einbrennen mit dem Elektrotauchlack unvernetzt.

In der noch nicht offengelegten DE-Patentanmeldung 41 25 459 werden spezielle organische Polymerpulver enthaltende wäßrige Überzugsmittel beschrieben. Diese können auf verschiedene Grundierungen aufgetragen werden; es wird auch erwähnt, daß gegebenenfalls naß-in-naß auf nicht vernetzte kataphoretisch abgeschiedene Filme aufgetragen werden kann. Die erhaltenen eingebrannten Füllerschichten ergeben Probleme in der Nachbearbeitbarkeit, z.B. beim Schleifen.

In der DE-A-41 26 476 wird ein Herstellungsverfahren für eine Mehrschichtlackierung durch Naß-in-Naß-Auftrag eines waßrigen anionisch stabilisierten aminharzvernetzenden Anstrichstoffes auf Basis eines gegebenenfalls urethanisierten Polyesters auf eine zuvor kataphoretisch abgeschiedene Schicht, gefólgt von gemeinsamem Einbrennen, beschrieben. Der kataphoretisch abgeschiedene Film soll beim Einbrennen einen maximalen Gewichtsverlust von 10 Gew.-% erleiden. Das Substrat kann danach gegebenenfalls mit einem Deckanstrich versehen werden. Derartige Mehrschichtlackierungen sind nicht zufriedenstellend hinsichtlich ihrer mechanischen Eigenschaften, wie z.B. Elastizität, Steinschlagfestigkeit oder der Zwischenschichthaftung. Besonders sind die Einschränkungen des maximalen Gewichtsverlustes in der unteren kataphoretisch abgeschiedenen' Lackschicht störend. Diese sind jedoch notwendig, um keine Störungen in der oberen Schicht zu erhalten.

Es bestand daher die Aufgabe, ein Verfahren zur Herstellung einer Mehrschichtlackierung mit Naß-in-Naß-Auftrag eines wäßrigen Überzugsmittels auf eine nicht ausgehärtete Elektrotauchlackschicht und gemeinsamem Einbrennen bereitzustellen, das zu Überzügen mit einer guten Zwischenschichthaftung, einer verbesserten Nachbearbeitbarkeit und guten mechanischen Eigenschaften, wie einer guten Elastizität, einer herabgesetzten Steinschlagempfindlichkeit und einer guten, fehlerfreien Oberflächen-Struktur führt.
Es hat sich gezeigt, daß diese Aufgabe gelöst werden kann, wenn die wäßrigen Überzügsmittel für die Zweitschicht unter Bildung von Urethangruppen vernetzen und bestimmte Bedingungen bezüglich der Pigment/Bindemittel-Verhältnisse und der minimalen Einbrenntemperatur der Überzugsmittel der Erst- und Zweit-Schicht eingehalten werden.

Einen Gegenstand der Erfindung bildet daher ein Verfahren zur. Herstellung von Mehrschichtlackierungen durch elektrophoretische Abscheidung einer ersten Überzugsschicht auf einem elektrisch leitendem Substrat, aus einem ersten wäßrigen. Überzugsmittel. Auftrag einer zweiten Überzugsschicht auf der Basis eines zweiten wäßrigen Überzugsmittels durch Spritzen
und gemeinsames Einbrennen der so erhaltenen Überzugsschichten, das dadurch gekennzeichnet ist, daß man für die zweite Überzugsschicht ein Überzugsmittel auf der Basis von einem oder mehreren, durch ionische Gruppen im wäßrigen Überzugsmittel stabilisierten Bindemitteln, die beim Einbrennen unter Bildung von Urethangruppen und gegebenenfalls Harnstoffgruppen, vernetzen, verwendet, und daß man die Überzugsmittel so wählt, daß das Gewichtsverhäitnis von Pigment/Bindemittel des ersten Überzugsmittels maximal 1 : 1 beträgt, und daß der Quotient aus dem Gewichtsverhältnis von Pigment/Bindemittel des ersten Überzugsmittels und dem Gewichtsverhältnis von Pigment/Bindemittel des zweiten Überzugsmittels einen Wert von bis zu 1,8, beispielsweise von 0 bis 1,8, bevorzugt bis zu 1,0, aufweist, und daß das Intervall der minimalen Einbrenntemperatur der zweiten Überzugsschicht über dem der ersten Überzugsschicht liegt, oder diese so überlappt, daß die Untergrenze des Intervalls der zweiten Überzugsschicht oberhalb der entsprechenden Untergrenze der ersten Überzugsschicht liegt.

Das Intervall der minimalen Einbrenntemperatur bezeichnet den Bereich von 10°C unter bis 10°C über der niedrigsten Temperatur, die bei einer Einbrenndauer von 20 Minuten notwendig ist, um eine Vernetzung der betreffenden Lackschicht zu erzeugen. Der Zustand der Vernetzung kann beispielsweise durch Einwirkung von Aceton auf die eingebrannte Lackschicht und anschließenden Kratztest ermittelt werden. Dabei kann wie folgt vorgegangen werden:

Auf die eingebrannte und mindestens 4 Stunden gelagerte Lackschicht wird ein mit Aceton getränkter Wattebausch aufgelegt und mit einem Uhrglas bedeckt. Nach 2 Minuten werden Uhrglas und Wattebausch entfernt und es wird eine weitere Minute gewartet. Zeigen sich dann bei der Lackschicht bei Beurteilung mit dem bloßen Auge keine Veränderungen und ist die Lackschicht durch einfachen mechanischen Aufwand, wie Kratzen mit einem stumpfen Gegenstand, beispielsweise Kratzen mit dem Daumennagel oder dem stumpfen Ende eines Hornspatels entsprechend einem Auflagegewicht von 4 Kg, nicht entfernbar, so ist die Vernetzung eingetreten. Dieser Test wird an einer Reihe von lackierten Versuchsblechen, die jeweils 20 Minuten bei unterschiedlichen Temperaturen eingebrannt worden sind, wiederholt, um die Mindesteinbrenntemperatur zu ermitteln. Als minimales Intervall wird dann der Bereich definiert, der um 10°C nach oben und nach unten von der so ermittelten Mindesteinbrenntemperatur abweicht. Dabei versteht es sich, daß der Test für die beiden zu untersuchenden Schichten (Schicht aus dem ersten Überzugsmittel und Schicht aus dem zweiten Überzugsmittel) jeweils unter gleichen Bedingungen durchgeführt wird.

Beim erfindungsgemäßen Verfahren können als elektrophoretisch abscheidbare Überzugsmittel an sich bekannte anodisch oder kathodisch abscheidbare Elektrotauchlacke (ETL), die keiner besonderen Beschränkung unterliegen, verwendet werden.

Es sind wäßrige Überzugsmittel mit einem Festkörper von beispielsweise 10 - 20 Gew.-%. Dieser besteht aus üblichen Bindemitteln, die ionische oder in ionische Gruppen überführbare Substituenten sowie zur chemischen Vernetzung fähige Gruppen tragen, sowie gegebenenfalls Pigmenten und weiteren Additiven. Die ionischen Gruppen können anionische oder in anionische Gruppen überführbare Gruppen, z.B. -COOH-Gruppen oder kationische oder in kationische Gruppen überführbare, z.B. Amino-, Ammonium-, z.B. quartäre Ammonium-, Phosphonium- und/oder Sulfonium-Gruppen sein. Bevorzugt sind Bindemittel mit basischen Gruppen. Besonders bevorzugt sind stickstoffhaltige basische Gruppen. Diese Gruppen können quaternisiert vorliegen oder sie werden mit einem üblichen Neutralisationsmittel, z.B. einer organischen Monocarbonsäure, wie z.B. Ameisensäure, Essigsäure, wie dem Fachmann geläufig, in ionische Gruppen überführt.

Beispiele für erfindungsgemäß einsetzbare anionische Gruppen enthaltende anodisch abscheidbare Elektrotauchlack-Bindemittel und Lacke (ATL) sind in der DE-A 28 24 418 beschrieben. Es handelt sich beispielsweise um Bindemittel auf Basis von Polyestern, Epoxidharzestern, Poly(meth)acrylaten, Maleinatölen oder Polybutadienölen mit einem Gewichtsmittel der Molmasse von beispielsweise 300 - 10000 und einer Säurezahl von 35 - 300 mg KOH/g. Die Bindemittel tragen -COOH, -SO₃H und/oder -PO₃H₂-Gruppen. Die Harze können nach Neutralisation von mindestens einem Teil der sauren Gruppen in die Wasserphase überführt werden. Die Lacke können auch übliche Vernetzer enthalten, z.B. Triazinharze, Vernetzer, die umesterungsfähige Gruppen enthalten oder blockierte Polyisocyanate.

Bevorzugt sind jedoch kathodische Elektrotauchlacke (KTL) auf Basis kationischer bzw. basischer Bindemittel. Solche basischen Harze sind beispielsweise primäre, sekundäre oder tertiäre Aminogruppen enthaltende Harze, deren Aminzahlen z.B. bei 20 bis 250 mg KOH/g liegen. Das Gewichtsmittel der Molmasse (M_{w}) der Basisharze liegt bevorzugt bei 300 bis 10000. Beispiele für solche Basisharze sind Aminoacrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige Gruppen enthalten.

Beispiele für in kathodischen Tauchlack (KTL)-Bädern eingesetzte Basisharze und Vernetzer, die erfindungsgemäß verwendet werden können, sind in der EP-A 082 291, EP-A 234 395, EP-A 209 857, EP-A 227 975, EP-A 178 531, EP-A 333 327, EP-A 310 971, EP-A 456 270, US 3 922 253, EP-A 261 385, EP-A 245 786, DE-A 33 24 211, EP-A 414 199, EP-A 476 514 beschrieben. Diese Harze können allein oder im Gemisch eingesetzt werden.

Zusätzlich zu den Basisharzen und gegebenenfalls vorhandenem Vernetzer kann das Elektrotauchlack (ETL)-Überzugsmittel Pigmente, Füllstoffe und/oder lackübliche Additive enthalten. Als Pigmente kommen die üblichen anorganischen und/oder organischen Pigmente in Frage. Beispiele sind Ruß, Titandioxid, Eisenoxid, Kaolin, Talkum oder Siliciumdioxid. Werden die Überzugsmittel als Korrosionsschutzgrundierung eingesetzt, so ist es möglich, daß sie Korrosionsschutzpigmente enthalten. Beispiele dafür sind Zinkphosphat, Bleisilikat oder organische Korrosionsinhibitoren. Die Art und Menge der Pigmente richtet sich nach dem Verwendungszweck der Überzugsmittel. Sollen klare Überzüge erhalten werden, so werden keine oder nur transparente Pigmente, wie z.B. mikronisiertes Titandioxid oder Siliziumdioxid eingesetzt. Sollen deckende Überzüge appliziert werden, so sind bevorzugt farbgebende Pigmente im Elektrotauchlackbad enthalten.

Die Pigmente können zu Pigmentpasten dispergiert werden, z.B. unter Verwendung von bekannten Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Als Additive sind die üblichen Additive für ETL-Überzugsmittel möglich. Beispiele dafür sind Netzmittel, Neutralisationsmittel, Verlaufsmittel, Katalysatoren, Antischaummittel sowie übliche Lösemittel. Über die Art und Menge der Katalysatoren kann das Vernetzungsverhalten beeinflußt werden. Es kann vorteilhaft sein, das ETL-Überzugsmittel frei von Katalysatoren zu formulieren.

Im Rahmen der vorliegenden Erfindung ist es wesentlich, daß die eingesetzten Elektrotauchlacke ein Pigment/Bindemittelverhältnis von maximal 1 : 1, bezogen auf das Gewicht, aufweisen. Bevorzugt sind Elektrotauchlacke, insbesondere kathodische Elektrotauchlacke, mit Pigment/Bindemittelverhältnissen von 0,1 : 1 bis 0,7 : 1.

Die eingesetzten Elektrotauchlacke besitzen Intervalle der minimalen Einbrenntemperatur, die bevorzugt im Bereich von 80 und 190°C, besonders bevorzugt von 100 und 180°C und insbesondere bevorzugt unter 160°C liegen. Die Intervalle der minimalen Einbrenntemperatur der Elektrotauchlacke können mit den Intervallen der minimalen Einbrenntemperatur der nachfolgenden wäßrigen Überzugsmittel überlappen. Die untere Grenze des Einbrennintervalls der Elektrotauchlacke liegt dabei unterhalb der unteren Grenze des Intervalls der minimalen Einbrenntemperatur des nachfolgend applizierten wäßrigen Überzugsmittels. Besonders bevorzugt liegt das Intervall der Elektrotauchlackschicht unterhalb dessen der nachfolgenden Schicht.

Bei den erfindungsgemäß als zweite Schicht naß-in-naß auf die unvernetzte Elektrotauchlackschicht applizierbaren Überzugsmitteln, z.B. Füllermaterialien, handelt es sich um wasserverdünnbare Überzugsmittel. Sie enthalten übliche Bindemittel, die ionische oder in ionische Gruppen überführbare Gruppen tragen. Dabei kann es sich um kationische bzw. in kationische Gruppen überführbare Gruppen oder um anionische bzw. in anionische Gruppen überführbare Gruppen handeln. Beispiele für bevorzugte Gruppen vom kationischen oder in diesen überführbaren Typ sind stickstoffhaltige Gruppen, wie z.B. primäre, sekundäre und tertiäre Aminogruppen und quarternäre Ammoniumgruppen. Beispiele für in anionische Gruppen überführbare Gruppen sind -COOH, -SO₃H, -PO₃H₂. Besonders bevorzugt sind Bindemittel mit Carboxylgruppen, die nach zumindest teilweiser Neutralisation mit Basen Wasserverdünnbarkeit der Bindemittel gewährleisten. Beispiele für geeignete Bindemittel sind (Meth)acrylcopolymere gegebenenfalls urethanisierte Polyesterharze, Polyurethanharze oder Epoxidharze. Der hier verwendete Ausdruck "(Meth) acryl" bedeutet "Methacryl und/oder Acryl". Weiterhin enthalten die Bindemittel Hydroxylgruppen und im Falle selbstvernetzender Systeme zusätzlich blockierte Isocyanatgruppen im Molekül. Im Falle der bevorzugten fremdvernetzenden Systeme enthalten die Überzugsmittel als Vernetzer blockierte Polyisocyanate. Sowohl bei den fremdvernetzenden als auch bei den selbstvernetzenden Systemen erfolgt die Vernetzung unter Ausbildung von Urethangruppen und gegebenenfalls Harnstoffgruppen.

Weiterhin enthalten die auf die unvernetzte Elektrotauchlackschicht applizierbaren, wasserverdünnbaren Überzugsmittel übliche Pigmente, Füllstoffe und lackübliche Additive. Bevorzugt enthalten sie jedoch keine organischen Polymerteilchen.

Die Überzugsmittel können beispielsweise als Decklacke oder bevorzugt als wäßrige Füller formuliert sein. Auch ein Einsatz als wäßriger Steinschlagzwischengrund, der nachfolgend in einem weiteren Lackierschritt gegebenenfalls naß-in-naß mit einem wäßrigen Füller überlackiert werden kann, ist möglich,

Beispiele für in erfindungsgemäß als Zweite Schicht applizierbaren Überzugsmitteln verwendbare kationische Bindemittel sind insbesondere in der noch nicht offengelegten DE-Patentanmeldung P 41 34 301 beschrieben. Die Bindemittel bestehen bevorzugt auf Basis von Polyester-, Polyurethan-, Acrylat- oder Epoxidharzen oder Mischungen davon. Sie enthalten mindestens zu einem Teil kationische Gruppen oder in kationische Gruppen überführbare Substituenten. In kationische Gruppen überführbare Substituenten sind beispielsweise Aminogruppen. Die Aminzahl der Bindemittel liegt bevorzugt bei 20 bis 200. Über die Anzahl der kationischen Gruppen wird die Wasserlöslichkeit beeinflußt. Die Vernetzungsdichte kann über die Menge der OH-Gruppen beeinflußt werden. Bevorzugt liegt die OH-Zahl bei 20 bis 400. Das Zahlenmittel der Molmasse (Mₙ) der kationischen Bindemittel liegt bevorzugt im Bereich von 500 bis 200000. Die Harze können selbstvernetzend (z.B. über blockierte NCO-Gruppen) oder fremdvernetzend sein, das heißt es können zusätzliche Vernetzer zugemischt werden. Beispiele für derartige zusätzliche Vernetzer sind Isocyanat-Vernetzer.

In die Bindemittel auf Polyesterbasis werden die aminofunktionellen Gruppen, z.B. über Aminoalkohol, eingebaut. Kationische Bindemittel auf Basis von Polyesterurethanen weisen bevorzugt ein Zahlenmittel der Molmasse (Mₙ) von 3000 bis 200000 und bevorzugt eine OH-Zahl von 50 bis 400 auf. Sie können beispielsweise durch Umsetzung von niedermolekularen Polyestern mit Diisocyanaten hergestellt werden. Epoxidharze mit kationischen Gruppen haben bevorzugt ein Zahlenmittel der Molmasse (Mₙ) von 500 bis 20000, die OH-Zahl liegt bevorzugt bei 20 bis 400. Die Acrylatharze weisen bevorzugt ein Zahlenmittel der Molmasse (Mₙ) von 500 bis 100000 auf. Die OH-Zahl liegt bevorzugt bei 30 bis 200.

Beispiele für in erfindungsgemäß als zweite Schicht applizierbaren Überzugsmitteln geeignete anionische Bindemittel sind in den DE-A 38 05 629, DE-A 39 36 288 oder DE-A 40 00 748 beschrieben. Es handelt sich um Bindemittel auf Basis von Polyurethanen und/oder Polyestern, die COOH-Gruppen enthalten. Diese sind nach mindestens teilweiser Neutralisation der ionischen Gruppen in die Wasserphase überführbar. Die anionischen Bindemittel weisen bevorzugt Säurezahlen von 10 bis 100 auf. Die OH-Zahlen liegen bevorzugt in der Größenordnung von 20 bis 250. Die Zahlenmittel der Molmasse (Mₙ) liegen bevorzugt in der Größenordnung von 1600 bis 50000.

Verwendbare Polyurethane weisen bevorzugt ein Zahlenmittel der Molmasse (Mₙ) von 1600 bis 50000, eine OH-Zahl von 30 bis 200 und eine Säurezahl von 10 bis 80 auf. Sie sind im allgemeinen linear aufgebaut, können jedoch auch Verzweigungen aufweisen. Die Diole, Polyole, ionische Gruppen enthaltenden Verbindungen sowie die Polyisocyanate, die zur Darstellung dieser Polyurethane eingesetzt werden können, sind bekannt. Die Bindemittel enthalten ionische Gruppen sowie reaktive OH-Gruppen, die zusammen mit Vernetzern auf Basis von Isocyanaten chemisch vernetzte Filme ergeben können.

Beispiele für verwendbare Polyesterharze sind solche mit einer OH-Zahl über 40 und einer Säurezahl von über 15.

Eine beispielsweise verwendbare Gruppen von Polyesterharzen ist gegebenenfalls urethanmodifiziert. Sie weisen bevorzugt ein Gewichtsmittel der Molmasse (M_{w}) von 5000 bis 50000, eine OH-Zahl von >40 und eine Säurezahl von 15 bis 40 auf. Sie entstehen durch Umsetzung von Polyesterpolyolen, Dihydroxycarbonsäuren und Diisocyanaten nach bekannten Verfahren und Überführung des Produktes in die Wasserphase. Zu diesen Bindemitteln werden noch bekannte Vernetzer auf Basis von blockierten Isocyanaten gegeben, die unter den Einbrennbedingungen miteinander unter Bildung von Urethangruppen reagieren und einen chemisch vernetzten Film ergeben.

Ein Beispiel für eine weitere Gruppe von verwendbaren Polyesterbindemitteln weist bevorzugt ein Zahlenmittel der Molmasse (Mₙ) von 2000 bis 7000 auf. Sie besitzen eine Säurezahl von 30 - 100 und eine OH-Zahl von 50 - 250. Die Herstellung von solchen Polyestern ist in der DE-A 38 05 629 beschrieben. Es können aus diesen Bindemitteln zusammen mit blockierten Isocyanat-Vernetzern, Pigmenten und Additiven wäßrige Überzugsmittel hergestellt werden.

Die noch nicht offengelegte DE-Patentanmeldung P 41 42 816 beschreibt besonders geeignete anionische Bindemittel für Überzugsmittel, die zur Formulierung von erfindungsgemäß als zweite Schicht zu applizierenden Überzugsmitteln, insbesondere für wäßrige Füller, geeignet sind. Diese Bindemittel sind ein durch vollständige oder teilweise Neutralisation mit Basen wasserlösliches Reaktionsprodukt von
(A) 10 bis 80 Gew.-%, vorzugsweise 15 bis 40 Gew.-%, eines Polyurethanharzes als Polycarboxylkomponente, das Carboxylgruppen entsprechend einer Säurezahl von 70 bis 160 mg KOH/g und im Molekül mindestens eine endständige blockierte Isocyanatgruppe enthält, frei von Hydroxylgruppen und Fettsäureresten mit mehr als 12 C-Atomen ist, und eine Grenzviskositätszahl von 6,5 bis 12,0 ml/g (siehe z.B. DIN 1342), vorzugsweise von 8,0 bis 11,0 ml/g, gemessen in Dimethylformamid (DMF) bei 20°C, aufweist, mit
(B) 20 bis 90 Gew.-%, vorzugsweise 60 bis 85 Gew.-% eines gegebenenfalls urethanmodifizierten Polyesterharzes als Polyhydroxylkomponente mit einer Hydroxylzahl von 50 bis 500 mg KOH/g, einer Säurezahl von weniger als 20 mg KOH/g und einer Grenzviskositätszahl von 8,0 bis 13,0 ml/g, vorzugsweise von 9,5 bis 12,0 ml/g, gemessen in DMF bei 20°C,
wobei das Reaktionsprodukt eine Grenzviskositätszahl von 13,5 bis 18,0 ml/g, vorzugsweise von 14,5 bis 16,5 ml/g, gemessen in DMF bei 20°C, aufweist.

Bei der Herstellung des Reaktionsprodukts kann die Komponente (A) mit der Komponente (B) lösemittelfrei oder in nicht mit Isocyanatgruppen reaktiven organischen Lösemitteln bevorzugt bei einer Temperatur zwischen 90 und 170°C und besonders bevorzugt bei einer Temperatur, die 10 bis 20°C über der Abspaltungstemperatur des Blockierungsmittels für die endständigen Isocyanatgruppen der Komponente (A) liegt, bis zu einer Grenzviskositätszahl von 13,5 bis 18,0 ml/g, vorzugsweise von 14,5 bis 16,5 ml/g, gemessen in DMF bei 20°C, umgesetzt werden, ohne daß dabei die Grenze der Löslichkeit in Wasser unterschritten wird, das heißt das Kondensationsprodukt muß wasserverdünnbar bleiben.

Anschließend werden die Carboxylgruppen des Reaktionsprodukts teilweise oder vollständig mit einer anorganischen oder organischen Base neutralisiert, worauf mit einem nicht wasserverdünnbaren blockierten Polyisocyanatvernetzer bevorzugt bei 40 bis 100°C vermischt wird und mit Wasser auf einen für die weitere Verarbeitung geeigneten Feststoffgehalt verdünnt wird.

Der Zusatz eines weiteren Vernetzers kann vor oder bevorzugt nach der Verdünnung mit Wasser bzw. der Bildung der Dispersion aus den Komponenten erfolgen.

Das als Polycarboxylkomponente (A) eingesetzte Polyurethanharz enthält bevorzugt als eine Ausgangsverbindung eine oder mehrere Dihydroxymonocarbonsäuren und weist eine Säurezahl von 70 bis 160 mg KOH/g auf. Pro Molekül ist mindestens eine endständige blockierte Isocyanatgruppe vorhanden. Das Blockierungsmittel wird bei erhöhter Temperatur, das heißt bei der Reaktionstemperatur zur Verknüpfung mit der Polyhydroxylkomponente (B), abgespalten. Definitionsgemäß enthält die Polycarboxylkomponente (A) weiterhin weder Hydroxylgruppen noch Reste von Fettsäuren mit mehr als 12 C-Atomen. Die Polycarboxylkomponente (A) ist für sich allein, ebenso wie das Reaktionsprodukt aus (A) und (B), nach teilweiser oder vollständiger Neutralisation der Carboxylgruppen mit einer Base, vorzugsweise mit einem sekundären oder tertiären Alkyl- oder Alkanolamin, wasserverdünnbar.

Das Polyurethanharz kann in bekannter Weise durch Umsetzung einer Mischung aus einem oder mehreren Polyisocyanaten und einem oder mehreren mit Monohydroxylverbindungen und/oder Oximen, z.B. Butanonoxim, teilblokkierten Polyisocyanaten mit der oder den Dihydroxymonocarbonsäuren und gegebenenfalls mit einem oder mehreren Polyolen erhalten werden, wobei die Mengenverhältnisse so gewählt werden, daß im Molekül der hydroxylgruppenfreien Polycarboxylkomponente (A) durchschnittlich mindestens eine endständig blockierte Isocyanatgruppe vorliegt.

Als Dihydroxymonocarbonsäure wird vorzugsweise Dimethylolpropionsäure eingesetzt. Prinzipiell sind auch andere Dihydroxymonocarbonsäuren geeignet.

Als Polyisocyanatverbindungen werden bevorzugt die handelsüblichen Diisocyanate, wie beispielsweise Toluylendiisocyanat, Isophorondiisocyanat oder Hexamethylendiisocyanat und gegebenenfalls auch geeignete Isocyanatprepolymere verwendet.

Zur Blockierung der freien NCO-Gruppen werden z.B. Monohydroxylverbindun gen, insbesondere Monoalkohole wie 2-Ethylhexanol, Monoether von Glykolen und Polyoxyalkylendiolen oder Butanonoxim so ausgewählt, daß sie bei der Umsetzung der Polycarboxylkomponente (A) mit der Polyhydroxylkomponente (B) abgespalten werden, das heißt die Abspaltungstemperatur soll zwischen 80 und höchstens 160°C liegen. Die Polycarboxylkomponente (A) hat eine Grenzviskositätszahl von 6,5 bis 12,0 ml/g, vorzugsweise von 8,0 bis 11,0 ml/g, gemessen in DMF bei 20°C (siehe z.B. DIN 1342).

Als Polyhydroxylkomponente (B) werden filmbildende Polyesterharze eingesetzt, die durch eine Hydroxylzahl von 50 bis 500 mg KOH/g, eine Säurezahl von weniger als 20 mg KOH/g und eine Grenzviskositätszahl von 8,0 bis 13,0 ml/g, vorzugsweise von 9,5 bis 12,0 ml/g, gemessen in DMF bei 20°C, gekennzeichnet sind. Die aus Polyolen und Polycarbonsäuren hergestellten Polyesterharze können gegebenenfalls Urethangruppen aufweisen und mit Monocarbonsäuren, die z.B. 5 bis 20 C-Atome enthalten, modifiziert sein. Der Anteil an Fettsäuren soll jedoch bevorzugt 15 Gew.-% nicht übersteigen.

Die Komponenten (A) und (B) werden beispielsweise bei 90 bis 170°C, vorzugsweise bei einer Temperatur, die 10 bis 20°C über der Abspaltungstemperatur des Blockierungsmittels für die endständigen Isocyanatgruppen in der Polycarboxylkomponente (A) liegt, bis zu einer Grenzviskositätszahl von 13,5 bis 18,0 ml/g, vorzugsweise von 14,5 bis 16,5 ml/g, gemessen in DMF bei 20°C, reagiert, wobei zu beachten ist, daß das Reaktionsprodukt nach einer Neutralisation der Carboxylgruppen noch einwandfrei wasserverdünnbar sein muß. Die Wasserverdünnbarkeit wird von der Anzahl der hydrophilen Gruppen, besonders der neutralisierbaren Gruppen, beeinflußt. Die Mengenverhältnisse liegen bei 10 bis 80 Gew.-%, vorzugsweise 15 bis 40 Gew.-%, für die Komponente (A) und bei 20 bis 90 Gew.-%, vorzugsweise 60 bis 85 Gew.-%, für die Komponente (B), auf Feststoff bezogen, wobei die Summe der Prozentzahlen jeweils 100 beträgt, und sie werden so gewählt, daß das Reaktionsprodukt eine Säurezahl von mindestens 25 mg KOH/g, vorzugsweise zwischen 30 und 50 mg KOH/g, aufweist.

Das Reaktionsprodukt wird anschließend vor oder nach teilweiser oder vollständiger Neutralisation der Carboxylgruppen mittels anorganischer oder organischer Basen, jedoch vor Zugabe eines wesentichen Anteils von Wasser, mit dem für sich allein nicht wasserverdünnbaren blockierten Polyisocyanatvernetzer gemischt und mit Wasser auf einen für die weitere Verarbeitung geeigneten Feststoffgehalt verdünnt.

Durch die zusätzliche hydrolysestabile Verknüpfung der Polycarboxylkomponente (A) mit der Polyhydroxylkomponente (B) über die Urethangruppe, durch die Auswahl spezifischer Rohstoffe für die Polycarboxylkomponente (A) zur Verbesserung der Verträglichkeit des Reaktionsproduktes mit dem blockierten Polyisocyanat und durch die Zumischung des blockierten Polyisocyanats vor der Zugabe eines wesentilchen Anteils von Wasser wird die Lagerstabilität oder die Scherstabilität der mit den beschriebenen Bindemittelkombinationen formulierten Lacke wesentlich erhöht.

Als Basen für die Neutralisation der Carboxylgruppen des Reaktionsproduktes aus den vorstehenden Komponenten (A) und (B) werden vorzugsweise sekundäre oder tertiäre Alkyl- oder Alkanolamine verwendet. Derartige Basen werden allgemein bevorzugt zur Neutralisation von sauren Gruppen der im erfindungsgemäß eingesetzten zweiten Überzugsmittel vorhandenen Bindemittel mit in anionische Gruppen überführbaren Gruppen, verwendet.

Die erfindungsgemäß naß-in-naß auf unvernetzte Elektrotauchlackschichten als zweite Schicht zu applizierenden wäßrigen Überzugsmittel können z.B. blockierte Polyisocyanate enthalten, die eine Vernetzung unter Urethangruppenbildung und gegebenenfalls Harnstoffgruppenbildung beim Einbrennen erlauben.

Als Vernetzungskomponente können z.B. handelsübliche blockierte Polyisocyanate, wie z.B. blockierte Diisocyanate eingesetzt werden, die vorzugsweise geringe Anteile an organischen Lösemitteln aufweisen und auch als Gemisch eingesetzt werden können. Es handelt sich um die bekannten aromatischen oder aliphatischen Polyisocyanate, die in der Lackindustrie üblich sind. Bevorzugt sind aliphatische Polyisocyanate. Es können auch oligomere Umsetzungsprodukte von Diisocyanaten eingesetzt werden, z.B. Isocyanurate, Biurete, Allophanate oder Umsetzungsprodukte mit niedermolekularen Polyolen, wie Trimethylolpropan, Neopentylglykol oder Glycerin. Bezogen auf den gesamten Festharzgehalt von Bindemittel und Vernetzer beträgt die Menge an blockiertem Polyisocyanat beispielsweise 10 bis 40 Gew.-%.

Als Blockierungsmittel sind die üblichen bekannten Blockierungsmittel geeignet. Beispiele dafür sind Oxime, Lactame, einwertige Alkohole oder Amine. Über das Blockierungsmittel kann die Vernetzungstemperatur des Überzugsmittels beeinflußt werden.

Unabhängig von den einsetzbaren Isocyanatvernetzern ist es möglich, daß die Bindemittel chemisch eingebaute blockierte Isocyanatgruppen enthalten. Es handelt sich dann um selbstvernetzende Bindemittel, die keines zusätzlichen Isocyanatvernetzers bedürfen.

Eine weitere Gruppe von Vernetzern, die zusätzlich zu den blockierten Isocyanatvernetzern für die erfindungsgemäß eingesetzten wäßrigen Überzugsmittel verwendet werden können, sind Aminoplastharze, wie z.B. Melamin- oder Benzoguanaminharze. Es handelt sich um übliche, dem Fachmann geläufige, Produkte, die auch im Handel erhältlich sind. Sie können mit Wasser verdünnbar oder auch nicht mit Wasser verdünnbar sein. Es ist auch möglich, sie als zusätzliche Vernetzer bei selbstvernetzenden Systemen einzusetzen.

Als Benzoguanaminharze werden beispielsweise voll- oder teilakylierte methanol- und/oder butanolveretherte Derivate, bevorzugt des Tetramethyloltyps, eingesetzt.

Als Melaminharze werden beispielsweise methanol- und/oder (iso)butanolveretherte Derivate, bevorzugt vom Hexamethylolmelamin abgeleitet, eingesetzt. Besonders bevorzugt sind wasserlösliche teilakylierte von Hexamethylolmelamin abgeleitete Harze. Bevorzugter Veretherungsalkohol ist Methanol.

Die Aminoplastharze können allein oder im Gemisch in Mengenanteilen von 2 - 30 Gew.-% bezogen auf den gesamten Festharzgehalt von Bindemittel und Vernetzer eingesetzt werden. Bevorzugt liegt der Mengenanteil bei 5-25, besonders bevorzugt bei 8 - 16 Gew.-% von Melamin- und/oder Benzoguanaminharz.

Es bedarf für den Fachmann keiner näheren Ausführung, daß die Menge an Aminoplastharz im fertigen wäßrigen Überzugsmittel der im fertigen wäßrigen Überzugsmittel vorhandenen Menge an blockiertem Polyisocyanat angepaßt werden kann, das heißt die Menge an Aminoplastharz kann je nach der Menge der blockierten Polyisocyanate bzw. deren chemischen Aufbau hinsichtlich Gehalt an latenten Isocyanatgruppen variiert werden. Dabei soll die Summe aus blockiertem Polyisocyanat und gegebenenfalls zusätzlichen Vernetzern 50 Gew.-%, bezogen auf den gesamten Bindemittelgehalt, nicht überschreiten.

In den erfindungsgemäß als zweite Schicht einsetzbaren wäßrigen Überzugsmitteln können übliche anorganische Füllstoffe und/oder anorganische und/oder organische Pigmente eingesetzt werden. Vorzugsweise enthalten die Überzugsmittel keine organischen Füllstoffe.

Es kann sich beispielsweise um anorganische Pigmente und Füllstoffe handeln, z.B. Ruß, Titandioxid, feindisperses Siliciumdioxid, Aluminiumsilikat (z.B. Kaolin), Magnesiumsilikat (z.B. Talkum), Calciumcarbonat (z.B. Kreide), Bariumsulfat (z.B. Schwerspat) und verschiedene Pigmente, wie z.B. Eisenoxidpigmente oder Phthalocyaninpigmente, Korrosionsschutzpigmente wie z.B. Blei- oder Chromatverbindungen.

Weiterhin können in diesen Überzugsmitteln übliche lacktechnische Additive enthalten sein, z.B. rheologiebeeinflussende Mittel, Antiabsetzmittel, Verlaufsmittel, Antischaummittel, Entlüftungsmittel, Dispergierhilfen oder Katalysatoren. Diese dienen zum speziellen Einstellen von lack- oder applikationstechnischen Eigenschaften. Ebenso können gegebenenfalls haftungsverbessernde Additive, wie z.B. wasserverdünnbare Epoxidharzmodifizierte Alkydharze oder Epoxidharzphosphorsäureester, den Überzugsmitteln zugesetzt werden.

Die erfindungsgemäß eingesetzten wäßrigen Überzugsmittel können auch ein oder mehrere organische Lösungsmittel enthalten. Als Lösungsmittel sind beispielsweise übliche lacktechnische Lösungsmittel geeignet. Diese können von der Herstellung der Bindemittel herrühren. Es ist günstig, wenn die Lösungsmittel zumindest teilweise mit Wasser mischbar sind.

Beispiele für solche Lösungsmittel sind Glykolether, z.B. Diethylenglykoldimethylether, Butylglykol, Ethoxypropanol, Butyldiglykol, Alkohole, z.B. Isopropanol, n-Butanol, Glykole, z.B. Ethylenglykol, N-Methyl-pyrrolidon sowie Ketone. Über die Auswahl der Lösungsmittel kann der Verlauf sowie die Viskosität des Überzugsmittels beeinflußt werden. Über den Siedepunkt der eingesetzten Lösungsmittel kann das Abdunstverhalten beeinflußt werden.

Das Pigment-Bindemittel-Verhältnis (PBV) beträgt je nach Art und Menge der eingesetzten Pigmente bzw. Füllstoffe beispielsweise 0,8 bis 2,5, für Hydrofüller bevorzugt 1,2 bis 1,8. Der Festkörper des Überzugsmittels liegt bevorzugt zwischen 25 und 60 Gew.-%, besonders bevorzugt bei 30 bis 55 Gew.-%. Der Lösungsmittelgehalt liegt beispielsweise bei bis zu 15 Gew.-%, bevorzugt bis zu 10 Gew.-%, jeweils bezogen auf das wäßrige Überzugsmittel.

Die Herstellung der erfindungsgemäß einsetzbaren wäßrigen Überzugsmittel erfolgt beispielsweise so, daß in geeigneten Dispergieraggregaten, wie z.B. einer Perlmühle, in dem Fachmann bekannter Weise Füllstoffe, bzw. Pigmente gegebenenfalls unter Hinzufügen geeigneter Dispergierhilfsmittel und Entschäumer in einer Teilmenge der im fertigen Überzugsmittel vorhandenen Menge an wäßrigem Bindemittelgemisch dispergiert werden. Der Teilchendurchmesser der Pigmente und/oder Füllstoffe beträgt nach dem Dispergieren bevorzugt weniger als 15 µm.

Anschließend wird mit dem verbleibenden Mengenanteil der wäßrigen Harzzusammensetzung gemischt und danach werden unter intensivem Vermischen gegebenenfalls weitere, im fertigen wäßrigen Überzugsmittel noch gewünschte Bestandteile zugesetzt.

Es kann günstig sein, die bevorzugten anionisch stabilisierten Überzugsmittel durch Zusatz von Aminen oder Aminoalkoholen, bevorzugt sekundäre oder tertiäre Alkyl- oder Alkanolamine, auf einen pH-Wert von 7,8 - 8,8, bevorzugt 8,2 - 8,4 einzustellen.

Danach kann mit Wasser die Viskosität eingestellt werden. Das fertige Überzugsmittel ist längere Zeit lagerfähig und zeigt keine wesentlichen Änderungen in der Viskosität oder Sedimentationsneigüng. Zur Applikation kann mit Wasser gegebenenfalls eine geeignete niedrige Viskosität, z.B. zum Spritzen, eingestellt werden.

Erfindungsgemäß ist die Pigmentierung der beiden Überzugsmittel für die erste und zweite Schicht aufeinander abzustimmen. Dabei soll das Verhältnis des PBV der ETL-Grundierung und des PBV der zweiten Schicht bei 0 bis 1,8 liegen. Bevorzugt liegt ein PBV (ETL) : PBV (2. Schicht) von 0.05 bis 1,0 vor.

Als Substrat für das erfindungsgemäße Verfahren sind elektrisch leitfähige Materialien, wie beispielsweise Metalle geeignet. Insbesondere geeignet sind z.B. Automobilkarossen oder Teile davon, sie können aus Metall oder elektrisch leitendem oder mit einer elektrisch leitfähigen Schicht versehenen Kunststoff bestehen. Auf diese Substrate wird die erste Überzugsschicht, insbesondere in Form einer Korrosionsschutzgrundierung, elektrophoretisch in üblicher Weise abgeschieden.

Diese kann zur Entfernung nicht festhaftender überschüssiger Lackanteile mit einer wäßrigen Lösung abgespült und danach vor dem Naß-in-Naß-Auftrag des nachfolgenden Überzugsmittels bevorzugt von anhaftender Feuchtigkeit befreit werden. Das geschieht z.B.. durch Ablüften. Dieses kann beispielsweise durch IR-Strahlung und/oder durch einen gegebenenfalls erwärmten Luftstrom geschehen, der über das Substrat geführt wird. Die Temperatur des Luftstromes kann beispielsweise bei Raumtemperatur bis 120°C liegen. Dabei soll eine Vernetzung des Elektrotauchlackfilms nicht stattfinden.

Auf das so erhaltene mit einer unvernetzten ETL-Schicht versehene Substrat wird die zweite Schicht, z.B. Füller-schicht, aufgetragen. Das Überzugsmittel wird durch Spritzen aufgetragen. Beispiele dafür sind Druckluftspritzen, Airless-Spritzen oder ESTA-Hochrotationsspritzen. Nach einer kurzen Ablüftzeit, gegebenenfalls bei erhöhten Temperaturen bis 80°C, wird das Werkstück mit den beiden Überzugsschichten bei Temperaturen zwischen 130 und 200°C, bevorzugt über 150°C, eingebrannt. Die Gesamtschichtdicke beträgt beispielsweise 30 bis 150 µm, bevorzugt 40 bis 90 µm. Nach dem Einbrennen kann die Oberfläche gegebenenfalls nachbehandelt werden, z.B. durch Schleifen,. um Fehlstellen zu beseitigen. Danach können auf diesem 2-Schicht-Überzug weitere farb- und/oder effektgebende Lackschichten, z.B. ein Uni-Decklack oder ein Basislack, bevorzugt Wasserbasislack, aufgebracht werden.

Die nach dem erfindungsgemäßen Verfahren hergestellten Überzüge weisen gute, optisch glatte Oberflächen auf. Die Haftung zwischen der ETL-Grundierungsschicht und der zweiten Schicht ist gut. Es ist eine feste Verbindung der beiden Schichten gegeben. Durch die abgestimmten Intervalle der minimalen Einbrenntemperatur lassen sich Oberflächenstörungen, wie Krater oder Blasen, vermeiden. Durch die abgestimmte Pigmentierung der beiden Schichten ist ein guter Verlauf sowie eine gute Kantenabdeckung gegeben. Werden weitere Nachfolgeschichten aufgetragen, ist die Haftung sowie die Oberflächenglätte gut.

Bei erfindungsgemäßem Vorgehen lassen sich optisch glatte, steinschlagfeste Mehrschichtlackierungen mit guten mechanischen Eigenschaften erzeugen, die den Anforderungen in der Automobilserienlackierung genügen. So wird durch das erfindungsgemäße Verfahren ermöglicht, die Anzahl der Einbrennschritte zu reduzieren, ohne dabei Nachteile in Kauf nehmen zu müssen, wie sie beim Stand der Technik auftreten, nämlich eingeschränkte Bearbeitbarkeit, verbesserungsbedürftige mechanische Eigenschaften und unbefriedigende Zwischenschichthaftung.

Die folgenden Beispiele dienen zur Erläuterung der Erfindung.

### Beispiel 1:

Ein bleifreier Kataphoreselack wurde gemäß EP-0 414 199-A2, Tabelle 3, Bindemittelkombination 2 hergestellt. Dabei enthielt der Kataphoreselack 0,5 Teile Ruß, 35,5 Teile Titandioxid, 5 Teile Hexylglykol, jeweils bezogen auf 100 Teile Festharz.

Das Intervall der minimalen Einbrenntemperatur dieses Kataphoreselacks wurde, wie folgt, festgestellt:

Durch kathodische Abscheidung auf üblichen Prüfblechen aus Karosseriestahl wurde jeweils eine Lackschicht in 20 µm Tockenschichtdicke ausgebildet. Nach Abspülen überschüssiger Lackanteile mit vollentsalztem Wasser und 5-minütigem Trocknen bei 80°C (Objekttemperatur) im Trockenofen (Abluftbetrieb) wurden die Prüfbleche 20 min. bei sich jeweils um in 10°C-Schritten unterscheidenden Objekttemperaturen, beginnend ab 120°C eingebrannt. Nach Abkühlen auf Raumtemperatur und 4-stündiger Lagerung wurde auf jedes Prüfblech für 2 min. ein acetongetränkter Wattebausch, der mit einem Uhrglas bedeckt wurde, aufgelegt und 1 min. nach Entfernung des Wattebausches die Vernetzung durch Kratzen mit dem Daumennagel entsprechend einem Auflagegewicht von 4 Kg an der lösemittelbelasteten Stelle geprüft. Die Lackschichten der bei 120, 130 und 140°C eingebrannten Prüfbleche ließen sich dabei entfernen. Die bei 150°C und 160°C eingebrannten Lackschichten widerstanden den Entfernungsversuchen. Damit beträgt das Intervall der minimalen Einbrenntemperatur 140 bis 160°C.

### Beispiel 2 (Herstellung eines Hydrofüllers):

### A) Herstellung der Polycarboxylkomponente A

In einem geeigneten Reaktionsgefäß wird eine Lösung von 945 Teilen (7 mol) Dimethylolpropionsäure in 1079 Teilen Diethylenglykoldimethylether (DGM) und 599 Teilen Methylisobutylketon (MIBK) vorgelegt. Innerhalb von 4 Stunden wird zu dieser Lösung bei 100°C eine Mischung aus 1044 Teilen (6 mol) TDI und 528 Teilen (2 mol) eines mit Ethylenglykolmonoethylether halbblockierten TDI gleichzeitig zugegeben. Sobald alle NCO-Gruppen umgesetzt sind, wird der Ansatz mit einer Mischung aus DGM und MIBK (2 : 1) auf einen Feststoffgehalt von 60 % verdünnt. Die Komponente A weist eine Säurezahl von 140 mg KOH/g und eine Grenzviskositätszahl, gemessen in N,N-Dimethylformamid (DMF) bei 20°C, von 10,2 ml/g auf.

### B) Herstellung der Polyhydroxylkomponente B

In einem geeigneten Reaktionsgefäß werden 38 Teile (0,2 mol) Tripropylenglykol, 125 Teile (1,2 mol) Neopentylglykol, 28 Teile (0,1 mol) isomerisierte Linolsäure, 83 Teile (0,5 mol) Isophthalsäure und 58 Teile (0,3 mol) Trimellithsäureanhydrid bei 230°C bis zu einer Säurezahl von weniger als 4 mg KOH/g verestert. Die Viskosität einer 50 %igen Lösung in Ethylenglykolmonobutylether nach DIN 53211/20°C beträgt 165 Sekunden, die Grenzviskositätszahl, gemessen in N,N-Dimethylformamid bei 20°C, beträgt 10,5 ml/g.

### C) Herstellung der Bindemittelkomponente (I)

30 Teile der Komponente A und 70 Teile der Komponente B werden miteinander gemischt und das vorhandene Lösemittel während des Aufheizens auf die Reaktionstemperatur von 150 - 160°C unter Vakuum weitgehend entfernt. Die Reaktion erfolgt in ca. 90 %iger Lösung in DGM. Die Temperatur von 150 - 160°C wird gehalten, bis eine Säurezahl von 35 - 39 mg KOH/g und eine Grenzviskositätszahl von 16,0, gemessen in N,N-Dimethylformamid bei 20°C, erreicht worden sind, wobei eine Probe nach Neutralisation mit Dimethylethanolamin einwandfrei wasserverdünnbar ist.

### D) Herstellung der wäßrigen Bindemittelmischung I + II

65 Teile der Komponente (I) werden bei 40 - 100°C mit 35 Teilen der Vernetzungskomponente (II), handelsübliches, mit Butanonoxim blockiertes Polyisocyanat (trimeres Hexamethylendiisocyanat mit Isocyanuratstruktur, z.B. Desmodur N 3390, Bayer) gemischt und mit Dimethylethanolamin auf einen Neutralisationsgrad von 90 % eingestellt. Anschließend wird mit deionisiertem Wasser auf einen Feststoffgehalt von 40 % verdünnt.

In 36 Teile der vorstehend unter D) erhaltenen 40 %igen wäßrigen Bindemittelmischung werden 0,7 Teile Ruß, 1 Teil Titandioxid, 18,3 Teile Bariumsulfat und 2 Teile Talkum eingerührt und unter dem Dissolver intensiv vermischt. Danach wird diese Mischung in einer Perlmühle intensiv vermahlen und mit 18 Teilen der im vorhergehenden Beispiel D) erhaltenen 40 %igen wäßrigen Zusammensetzung und 19,6 Teilen deionisiertem Wasser aufgelackt.

Unter dem Dissolver wurden 3 Teile Butylglykol, 0,2 Teile Triethanolamin, 0,2 Teile eines polyethermodifizierten Dimethylpolysiloxancopolymeren (handelsübliches Verlaufsadditiv) und 1 Teil einer 10 %igen Lösung eines Polysiloxancopolymeren (handelsüblicher Entschäumer) hinzugefügt und intensiv vermischt.

### Beispiel 3:

Es wird analog zu Beispiel 2 verfahren mit dem Unterschied, daß anstelle der 19,6 Teile deionisierten Wassers nur 17,1 Teile deionisiertes Wasser verwendet werden und zusätzlich 2,5 Teile einer 80 %igen butanolischen Lösung eines butanolveretherten Benzoguanaminharzes vom Tetramethyloltyp im letzten Schritt unter dem Dissolver hinzugefügt werden.

Die in den Beispielen 2 und 3 beschriebenen wäßrigen Füllerzusammensetzungen wurden mit deionisiertem Wasser auf Verarbeitungsviskosität eingestellt und auf Prüfbleche aus Karosseriestahl aufgespritzt.

Die Trockenschichtdicke betrug dabei jeweils 35 µm. Nach 5-minütigem Trocknen bei 80°C wurden die Prüfbleche wie in Beispiel 1 beschrieben eingebrannt und jeweils das Intervall der minimalen Einbrenntemperatur ermittelt, wobei beide Hydrofüller ein identisches Ergebnis erbrachten. Die bei 120, 130, 140, 150 und 160°C eingebrannten Lackschichten ließen sich entfernen. Die bei 170 und 180°C eingebrannten Lackschichten widerstanden den Entfernungsversuchen. Damit liegt das Intervall der minimalen Einbrenntemperatur für beide Hydrofüller bei 160 bis 180°C.

### Herstellung von Mehrschichtlackierungen:

### Beispiel 4 (Vergleichsbeispiel):

Der Kataphoreselack gemäß Beispiel 1 wird in 20 µm Trockenschichtdicke durch kathodische Abscheidung auf ein Prüfblech aus Karosseriestahl aufgebracht. Nach Abspülen überschüssiger Lackanteile mit vollentsalztem Wasser wird 25 min. bei 180°C (Objekttemperatur) eingebrannt. Auf das abgekühlte Substrat wird der Hydrofüller aus Beispiel 2 in 35 µm Trockenschichtdicke aufgespritzt. Nach 5-minütigem Ablüften bei Raumtemperatur wird 10 min. bei 80°C (Objekttemperatur getrocknet und danach 15 min. bei 165°C (Objekttemperatur) eingebrannt. Nach dem Abkühlen wird das lackierte Probeblech zur Hälfte abgedeckt und danach ein handelsüblicher für die Automobilserienlackierung geeigneter Einschichtdecklack in einer Trockenschichtdicke von 40 µm aufgespritzt und 30 min. bei 130°C (Objekttemperatur) eingebrannt.

### Beispiel 5 (Vergleichsbeispiel):

Es wird analog zu Beispiel 4 verfahren mit dem Unterschied, daß der Hydrofüller aus Beispiel 3 eingesetzt wird.

### Beispiel 6 (erfindungsgemäß):

Der Kataphoreselack gemäß Beispiel 1 wird in 20 µm Trockenschichtdicke (ergibt sich, wenn solo eingebrannt wird) durch kathodische Abscheidung auf ein Prüfblech aus Karosseriestahl aufgebracht. Nach Abspülen überschüssiger Lackanteile mit vollentsalztem Wasser und 5-minütigem Trocknen bei 80°C (Objekttemperatur) im Trockenofen (Abluftbetrieb) wird der Hydrofüller aus Beispiel 2 in 35 µm Trockenschichtdicke (ergibt sich, wenn solo eingebrannt wird) aufgespritzt. Nach 5-minütigem Ablüften bei Raumtemperatur wird 10 min. bei 80°C (Objekttemperatur) getrocknet und danach 15 min. bei 165°C (Objekttemperatur) eingebrannt. Nach dem Abkühlen wird das lackierte Probeblech zur Hälfte abgedeckt und danach ein handelüblicher für die Automobilserienlackierung geeigneter Einschichtdecklack in einer Trockenschichtdicke von 40 µm aufgespritzt und 30 min. bei 130°C (Objekttemperatur) eingebrannt.

### Beispiel 7 (erfindungsgemäß):

Es wird analog zu Beispiel 6 verfahren mit dem Unterschied, daß der Hydrofüller aus Beispiel 3 eingesetzt wird.

Nach Beispiel 4 - 7 ergaben sich Mehrschichtlackierungen mit guten Ergebnissen im Gitterschnittest (DIN 53151), VDA-Steinschlagtest (Prüfung mittels Steinschlag-Prüfgerät nach VDA der Fa. Erichsen, Modell 508 bei + 20°C mit 1 kg Stahlschrot, kantig, 4 - 5 mm, beschleunigt durch Druckluft von 3 bar) und im Steinschlagtest nach der "SPLITT-Methode" (Prüfung mittels Steinschlagsimulationsgerät gemäß "Farbe und Lack", 8/1984, Seiten 646 - 653).

Nachfolgende Tabelle stellt differenzierende technologische Prüfergebnisse der gemäß Beispiel 4 bis 7 hergestellten Zweischichtlackierungen aus KTL und Hydrofüller zusammen:

| Beispiel-Nummer 3) | Impacttest 1)kg x m (inch x pound) | Erichsen-Tiefung 2)mm |
|---|---|---|
| 4 | 0,4609 i.O. (40 i.O.) | 4,9 |
| 5 | 0,1728 i.O. (15 i.O.) | 8,0 |
| 6 | 0,9217 i.O. (80 i.O.) | 7,8 |
| 7 | 0,9217 i.O. (80 i.O.) | 7,7 |

| | | |
|---|---|---|
| 1) 0,9072 kg, 15,875 mm (2 pound, 5/8 inch); Ausbeulen; bei Raumtemperatur nach ASTM D 27 94 | | |
| 2) bei Raumtemperatur nach DIN 53 1 56 | | |
| 3) Zweischichtaufbau ohne Decklack. | | |

## Patentansprüche

1. Verfahren zur Herstellung von Mehrschichtlackierungen durch elektrophoretische Abscheidung einer ersten Überzugsschicht auf einem elektrisch leitenden Substrat aus einem ersten wäßrigen Überzugsmittel, Auftrag einer zweiten Überzugsschicht auf der Basis eines zweiten wäßrigen Überzugsmittels durch Spritzen, und gemeinsames Einbrennen der so erhaltenen Überzugsschichten, **dadurch gekennzeichnet, daß** man für die zweite Überzugsschicht ein Überzugsmittel auf der Basis von einem oder mehreren, durch ionische Gruppen im wäßrigen Überzugsmittel stabilisierten Bindemitteln, die beim Einbrennen unter Bildung von Urethangruppen vernetzen, verwendet, wobei man die Überzugsmittel so wählt, daß das Gewichtsverhältnis von Pigment/Bindemittel des ersten Überzugsmittels maximal 1 : 1 beträgt, und, daß der Quotient aus dem Gewichtsverhältnis von Pigment/Bindemittel des ersten Überzugsmittels und dem Gewichtsverhältnis von Pigment/Bindemittel des zweiten Überzugsmittels einen Wert von bis zu 1,8 aufweist und daß das Intervall der minimalen Einbrenntemperatur der zweiten Überzugsschicht über dem der ersten Überzugsschicht liegt oder dieses so überlappt, daß die untere Grenze des Intervalls für die zweite Überzugsschicht über der Untergrenze des Intervalls für die erste Überzugsschicht liegt.

2. Verfahren nach Anspruch 1, **dadurch gekennzeichnet, daß** die Überzugsmittel so gewählt werden, daß der Quotient aus dem Gewichtsverhältnis von Pigment/Bindemittel des ersten Überzugsmittels und dem des zweiten Überzugsmittels einen Wert von 0,05 bis 1,0 aufweist.

3. Verfahren nach einem der vorhergehenden Ansprüche, **dadurch gekennzeichnet, daß** als zweites Überzugsmittel ein solches verwendet wird, das beim Einbrennen zusätzlich unter Bildung von Harnstoffgruppierungen vernetzt.

4. Verfahren nach einem der vorhergehenden Ansprüche, **dadurch gekennzeichnet, daß** als zweites Überzugsmittel ein solches verwendet wird, das frei von organischen Polymerteilchen ist.

5. Verfahren nach einem der vorhergehenden Ansprüche, **dadurch gekennzeichnet, daß** auf die zweite Überzugsschicht eine oder mehrere weitere Überzugsschichten aufgebracht werden.

6. Verfahren nach Anspruch 5, **dadurch gekennzeichnet, daß** eine dritte Überzugsschicht naß-in-naß auf die zweite Überzugsschicht aufgebracht und anschließend gemeinsam eingebrannt wird.

7. Verfahren nach einem der vorhergehenden Ansprüche, **dadurch gekennzeichnet, daß** zur Herstellung der zweiten Überzugsschicht ein Überzugsmittel auf der Basis eines oder mehrerer Bindemittel mit kationischen und/oder in kationische Gruppen überführbaren Gruppen, oder mit anionischen und/oder in anionische Gruppen überführbaren Gruppen, mit einer OH-Zahl von 20 bis 400, verwendet wird.

8. Verfahren nach Anspruch 7, **dadurch gekennzeichnet, daß** das Bindemittel auf einem oder mehreren Polyesterharzen, Polyurethanharzen, Polyepoxidharzen und/oder Acrylatharzen basiert.

9. Verfahren nach Anspruch 7 oder 8, **dadurch gekennzeichnet, daß** das Bindemittel selbstvernetzend ist und blokkierte Isocyanatgruppen im Molekül enthält.

10. Verfahren nach Anspruch 7 oder 8, **dadurch gekennzeichnet, daß** das Bindemittel fremdvernetzend ist und zusammen mit einem oder mehreren blockierten Polyisocyanaten und gegebenenfalls Aminoplastharzen als Vernetzer verwendet wird.

11. Verfahren nach einem der vorhergehenden Ansprüche, **dadurch gekennzeichnet, daß** zur Herstellung der zweiten Überzugsschicht ein wäßriges Überzugsmittel auf der Basis eines oder mehrerer durch vollständige oder teilweise Neutralisation mit Basen wasserlöslicher Bindemittel verwendet wird, bei denen es sich um das Reaktionsprodukt handelt von
A) 10 bis 80 Gew.-%, vorzugsweise 15 bis 40 Gew.-%, eines Polyurethanharzes als Polycarboxylkomponente, das Carboxylgruppen entsprechend einer Säurezahl von 70 bis 160 mg KOH/g und im Molekül mindestens eine endständige blockierte Isocyanatgruppe enthält, frei von Hydroxylgruppen und Fettsäureresten mit mehr als 12 C-Atomen ist, und eine Grenzviskositätszahl von 6,5 bis 12,0 ml/g (siehe z.B. DIN 1342), vorzugsweise von 8,0 bis 11,0 ml/g, gemessen in Dimethylformamid (DMF) bei 20°C, aufweist, mit
B) 20 bis 90 Gew.-%, vorzugsweise 60 bis 85 Gew.-% eines gegebenenfalls urethanmodifizierten Polyesterharzes als Polyhydroxylkomponente mit einer Hydroxylzahl von 50 bis 500 mg KOH/g, einer Säurezahl von weniger als 20 mg KOH/g und einer Grenzviskositätszahl von 8,0 bis 13,0 ml/g, vorzugsweise von 9,5 bis 12,0 ml/g, gemessen in DMF bei 20°C,
wobei das Reaktionsprodukt eine Grenzviskositätszahl von 13,5 bis 18,0 ml/g, vorzugsweise von 14,5 bis 16,5 ml/g, gemessen in DMF bei 20°C, aufweist.

12. Verfahren nach Anspruch 11, **dadurch gekennzeichnet, daß** das Überzugsmittel als Vernetzer ein oder mehrere blockierte Polyisocyanate und gegebenenfalls Aminoplastharze enthält.

13. Verfahren nach einem der vorhergehenden Ansprüche, **dadurch gekennzeichnet, daß** als zweite Überzugsmittelschicht eine Füllerschicht, Decklackschicht oder Basislackschicht für Mehrschichtüberzüge aufgebracht wird.

14. Verfahren nach einem der vorhergehenden Ansprüche, **dadurch gekennzeichnet, daß** es zur Herstellung von Mehrschichtlackierungen auf Kraftfahrzeugkarossen oder deren Teilen durchgeführt wird.

## Claims

1. A method of producing multi-layer coatings by the electrophoretic deposition of a first coating layer, comprising a first aqueous coating medium, on an electrically conducting substrate, application of a second coating layer based on a second aqueous coating medium by spraying, and joint stoving of the coating layers thus obtained, **characterised in that** a coating medium based on one or more binder vehicles which are stabilised in the aqueous coating medium by ionic groups and which crosslink during stoving with the formation of urethane groups is used for the second coating layer, wherein the coating media are selected so that the maximum ratio by weight of pigment/binder vehicle of the first coating medium is 1 : 1, that the quotient consisting of the ratio by weight of pigment/binder vehicle of the first coating medium over the ratio by weight of pigment/binder vehicle of the second coating medium has a value of up to 1.8, and that the minimum stoving temperature interval of the second coating layer is above that of the first coating layer or overlaps the latter so that the lower limit of the interval for the second coating layer is above the lower limit of the interval for the first coating layer.

2. A method according to claim 1, **characterised in that** the coating media are selected so that the quotient consisting of the ratio by weight of pigment/binder vehicle of the first coating medium over that of the second coating medium has a value of 0.05 to 1.0.

3. A method according to either one of the preceding claims, **characterised in that** a coating medium which additionally crosslinks during stoving with the formation of urea groups is used as the second coating medium.

4. A method according to any one of the preceding claims, **characterised in that** a coating medium which is free from organic polymer particles is used as the second coating medium.

5. A method according to any one of the preceding claims, **characterised in that** one or more further coating layers are applied to the second coating layer.

6. A method according to claim 5, **characterised in that** a third coating layer is applied wet-into-wet to the second coating layer and is subsequently stoved jointly.

7. A method according to any one of the preceding claims, **characterised in that** a coating medium based on one or more binder vehicles comprising cationic groups and/or groups which can be converted into cationic groups, or comprising anionic groups and/or groups which can be converted into anionic groups, with an OH number of 20 to 400, is used for the production of the second coating layer.

8. A method according to claim 7, **characterised in that** the binder vehicle is based on one or more polyester resins, polyurethane resins, polyepoxy resins and/or acrylate resins.

9. A method according to claim 7 or 8, **characterised in that** the binder vehicle is self-crosslinking and contains blocked isocyanate groups in its molecule.

10. A method according to claim 7 or 8, **characterised in that** the binder vehicle is externally crosslinkable and is used together with one or more blocked polyisocyanates and optionally amino plastic resins as crosslinking agents.

11. A method according to any one of the preceding claims, **characterised in that** an aqueous coating medium based on one or more binder vehicles which are watersoluble due to complete or partial neutralisation with bases is used for the production of the second coating layer, which binder vehicles are the reaction product of
A) 10 to 80 % by weight, preferably 15 to 40 % by weight, of a polyurethane resin, as a polycarboxyl component which contains carboxyl groups corresponding to an acid number of 70 to 160 mg KOH/g and which contains at least one terminal blocked isocyanate group in its molecule, which is free from hydroxyl groups and from fatty acid residues comprising more than 12 C atoms, and which has a limiting viscosity number of 6.5 to 12.0 ml/g (see DIN 1342, for example), preferably of 8.0 to 11.0 ml/g, as measured in dimethylformamide (DMF) at 20°C, with
B) 20 to 90 % by weight, preferably 60 to 85 % by weight, of a polyester resin, which is optionally urethane-modified, as a polyhydroxyl component which has a hydroxyl number of 50 to 500 mg KOH/g, an acid number less than 20 mg KOH/g and a limiting viscosity number of 8.0 to 13.0 ml/g, preferably of 9.5 to 12.0 ml/g, as measured in DMF at 20°C,
wherein the reaction product has a limiting viscosity number of 13.5 to 18.0 ml/g, preferably of 14.5 to 16.5 ml/g, as measured in DMF at 20°C.

12. A method according to claim 11, **characterised in that** the coating medium contains one or more blocked polyisocyanates and optionally amino plastic resins as crosslinking agents.

13. A method according to any one of the preceding claims, **characterised in that** a primer surfacer coat, a covering lacquer coat or a base lacquer coat for multi-layer coatings is applied as the second coating medium layer.

14. A method according to any one of the preceding claims, **characterised in that** it is carried out for the production of multi-layer coatings on motor vehicle bodies or on parts thereof.

## Revendications

1. Procédé pour la réalisation d'un revêtement à plusieurs couches par déposition par électrophorèse d'une première couche de revêtement sur un support conducteur de l'électricité à l'aide d'un premier produit de revêtement aqueux, application au pistolet d'une deuxième couche de revêtement à l'aide d'un deuxième produit de revêtement aqueux, et cuisson en commun des couches de revêtement ainsi obtenus, **caractérisé en ce que**, pour la deuxième couche de revêtement, on utilise un produit de revêtement à base d'un ou plusieurs liants stabilisés par des groupes ioniques dans le produit de revêtement aqueux et qui réticulent à la cuisson avec formation de groupes uréthanne, et on choisit les produits de revêtement en sorte que le rapport en poids pigment/liant du premier produit de revêtement soit au maximum de 1:1 et que le quotient entre le rapport en poids pigment/liant du premier produit de revêtement et le rapport en poids pigment/liant du deuxième produit de revêtement ait une valeur allant jusqu'à 1,8 et que l'intervalle de la température minimale de cuisson de la deuxième couche de revêtement se situe au-dessus de celui de la première couche de revêtement ou chevauche celui-ci, c'est-à-dire que la limite inférieure de l'intervalle, pour la deuxième couche de revêtement, soit située au-dessus de la limite inférieure de l'intervalle pour la première couche de revêtement.

2. Procédé selon revendication 1, **caractérisé en ce que** l'on choisit les produits de revêtement en sorte que le quotient du rapport en poids pigment/liant du premier produit de revêtement et du rapport en poids pigment/liant du deuxième produit de revêtement ait une valeur de 0,05 à 1,0.

3. Procédé selon une des revendications qui précèdent, **caractérisé en ce que** l'on utilise un deuxième produit de revêtement qui, à la cuisson, réticule avec formation en outre de groupements urée.

4. Procédé selon une des revendications qui précèdent, **caractérisé en ce que** l'on utilise un deuxième produit de revêtement exempt de particules de polymères organiques.

5. Procédé selon une des revendications qui précèdent, **caractérisé en ce que**, sur la deuxième couche de revêtement, on applique une ou plusieurs autres couches de revêtement.

6. Procédé selon revendication 5, **caractérisé en ce que** l'on applique sur la deuxième couche de revêtement, au mouillé-sur-mouillé, une troisième couche de revêtement et on les cuit en commun.

7. Procédé selon une des revendications qui précèdent, **caractérisé en ce que**, pour la réalisation de la deuxième couche de revêtement, on utilise un produit de revêtement à base d'un ou plusieurs liants à groupes cationiques et/ou convertibles en groupes cationiques, ou à groupes anioniques et/ou convertibles en groupes anioniques, ayant un indice d'OH de 20 à 400.

8. Procédé selon revendication 7, **caractérisé en ce que** le liant est à base d'une ou plusieurs résines de polyesters, de polyuréthannes, de polyépoxydes et/ou d'acrylates.

9. Procédé selon revendication 7 ou 8, **caractérisé en ce que** le liant est autoréticulant et contient dans la molécule des groupes isocyanates bloqués.

10. Procédé selon revendication 7 ou 8, **caractérisé en ce que** le liant nécessite un agent réticulant étranger et est utilisé avec un ou plusieurs polyisocyanates bloqués et le cas échéant des résines aminoplastes servant d'agents réticulants.

11. Procédé selon'une des revendications qui précèdent, **caractérisé en ce que**, pour la réalisation de la deuxième couche de revêtement, on utilise un produit de revêtement aqueux à base d'un ou plusieurs liants rendus solubles dans l'eau par neutralisation complète ou partielle à l'aide de bases, et qui consistent en le produit de réaction de
(A) 10 à 80 % en poids, de préférence 15 à 40 % en poids, d'une résine de polyuréthanne servant de composant polycarboxylé, contenant des groupes carboxyle en quantité correspondant à un indice d'acide de 70 à 160 mg de KOH/g et au moins un groupe isocyanate bloqué terminal dans la molécule, exempte de groupes hydroxy et de radicaux d'acides gras à plus de 12 atomes de carbone, ayant un indice de viscosité limite de 6,5 à 12,0 ml/g (cf. par exemple norme allemande DIN 1342), de préférence de 8,0 à 11,0 ml/g, la mesure étant faite dans le diméthylformamide (DMF) à 20°C, avec
(B) 20 à 90 % en poids, de préférence 60 à 85 % en poids d'une résine de polyester, éventuellement à modification uréthanne, servant de composant polyhydroxylé, ayant un indice d'hydroxyle de 50 à 500 mg de KOH/g, un indice d'acide inférieur à 20 mg de KOH/g et un indice de viscosité limite de 8,0 à 13,0 ml/g, de préférence de 9,5 à 12,0 ml/g, la mesure étant faite dans le DMF à 20°C,
le produit de réaction ayant un indice de viscosité limite de 13,5 à 18,0 ml/g, de préférence de 14,5 à 16,5 ml/g, la mesure étant faite dans le DMF à 20°C.

12. Procédé selon revendication 11, **caractérisé en ce que** le produit de revêtement contient un ou plusieurs polyisocyanates bloqués et le cas échéant des résines aminoplastes en tant qu'agents réticulants.

13. Procédé selon une des revendications qui précèdent, **caractérisé en ce que** la deuxième couche de revêtement est une couche de matière de charge, une couche de laque de couverture ou une couche de laque de base pour revêtements à plusieurs couches.

14. Procédé selon une des revendications qui précèdent, **caractérisé en ce qu'**on l'exploite pour la réalisation de revêtements de laque à plusieurs couches sur des carrosseries de véhicules ou des pièces de carrosseries de véhicules.
